(19) Europäisches Patentamt
European Patent Office
Office européen des brevets

(11) **EP 2 136 587 A2**

(12) **EUROPEAN PATENT APPLICATION**

(43) Date of publication:
**23.12.2009 Bulletin 2009/52**

(51) Int Cl.:
***H04W 28/16*** (2009.01)

(21) Application number: **09171903.9**

(22) Date of filing: **31.07.2007**

(84) Designated Contracting States:
**DE FR GB**

(30) Priority: **18.08.2006 GB 0616474**
**06.11.2006 GB 0622124**

(62) Document number(s) of the earlier application(s) in accordance with Art. 76 EPC:
**07113554.5 / 1 890 447**

(71) Applicant: **FUJITSU LIMITED**
**Kawasaki-shi,**
**Kanagawa 211-8588 (JP)**

(72) Inventors:
• **Hart, Michael John Beems**
**London, W12 9LL (GB)**
• **Zhou, Yuefeng**
**Ashtead, Surrey KT21 2JH (GB)**
• **Viorel, Dorin**
**Calgary Alberta T3L 1Z2 (CA)**

• **Zhu, Chenxi**
**Gaithersburg, MD 20878 (US)**
• **Nakamura, Michiharu**
**Kawasaki-shi Kagawa 211-8588 (JP)**
• **Watanabe, Masahiro**
**Kawasaki-shi Kanagawa 211-8588 (JP)**
• **Fujita, Hiroshi**
**Kawasaki-shi Kanagawa 211-8588 (JP)**
• **Yoshida, Makoto**
**Kawasaki-shi Kanagawa 211-8588 (JP)**

(74) Representative: **Wilding, Frances Ward et al**
**Haseltine Lake LLP**
**Lincoln House, 5th Floor**
**300 High Holborn**
**London WC1V 7JH (GB)**

Remarks:
This application was filed on 30-09-2009 as a divisional application to the application mentioned under INID code 62.

(54) **communication systems**

(57) A transmission method for use in a multi-hop wireless communication system, the system comprising a source apparatus, a destination apparatus and one or more intermediate apparatuses, said source apparatus being operable to transmit information along a series of links forming a communication path extending from the source apparatus to the destination apparatus via the or each intermediate apparatus, and the or each intermediate apparatus being operable to receive information from a previous apparatus along the path and to transmit the received information to a subsequent apparatus along the path, the system having access to at least one predetermined transmission introduction sequence and also having access to a time-frequency format for use in assigning available transmission frequency bandwidth during a discrete transmission interval, said format defining a plurality of transmission windows within such an interval, each window occupying a different part of that interval and having a frequency bandwidth profile within said available transmission frequency bandwidth over its part of that interval, each said window being assignable for such a transmission interval to at least one of said apparatuses for use in transmission, the method comprising: when transmitting a message with a preamble in a particular transmission interval, transmitting the preamble in a first transmission window of that transmission interval; and transmitting the or one of the transmission introduction sequences in a second transmission window of that transmission interval other than the first transmission window preferably as control information for use by at least one said intermediate apparatus or the destination apparatus.

EP 2 136 587 A2

**Fig.1**

RA zone and RA region definition.

**Description**

**Introduction**

Currently there exists significant interest in the use of multihop techniques in packet based radio and other communication systems, where it is purported that such techniques will enable both extension in coverage range and increase in system capacity (throughput).

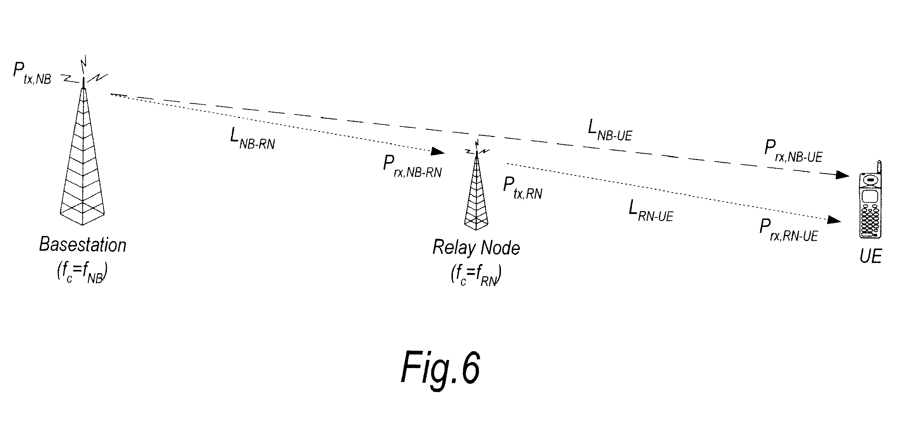

In a multi-hop communication system, communication signals are sent in a communication direction along a communication path (C) from a source apparatus to a destination apparatus via one or more intermediate apparatuses. Figure 6 illustrates a single-cell two-hop wireless communication system comprising a base station BS (known in the context of 3G communication systems as "node-B" NB) a relay node RN (also known as a relay station RS) and a user equipment UE (also known as mobile station MS). In the case where signals are being transmitted on the downlink (DL) from a base station to a destination user equipment (UE) via the relay node (RN), the base station comprises the source station (S) and the user equipment comprises the destination station (D). In the case where communication signals are being transmitted on the uplink (UL) from a user equipment (UE), via the relay node, to the base station, the user equipment comprises the source station and the base station comprises the destination station. The relay node is an example of an intermediate apparatus (I) and comprises: a receiver, operable to receive data from the source apparatus; and a transmitter, operable to transmit this data, or a derivative thereof, to the destination apparatus.

Simple analogue repeaters or digital repeaters have been used as relays to improve or provide coverage in dead spots. They can either operate in a different transmission frequency band from the source station to prevent interference between the source transmission and the repeater transmission, or they can operate at a time when there is no transmission from the source station.

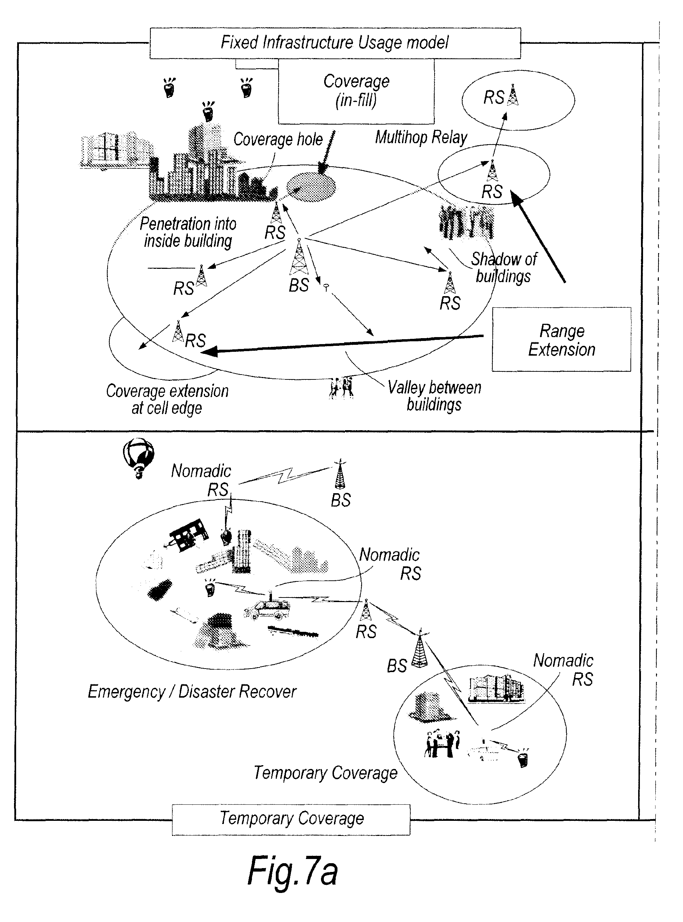

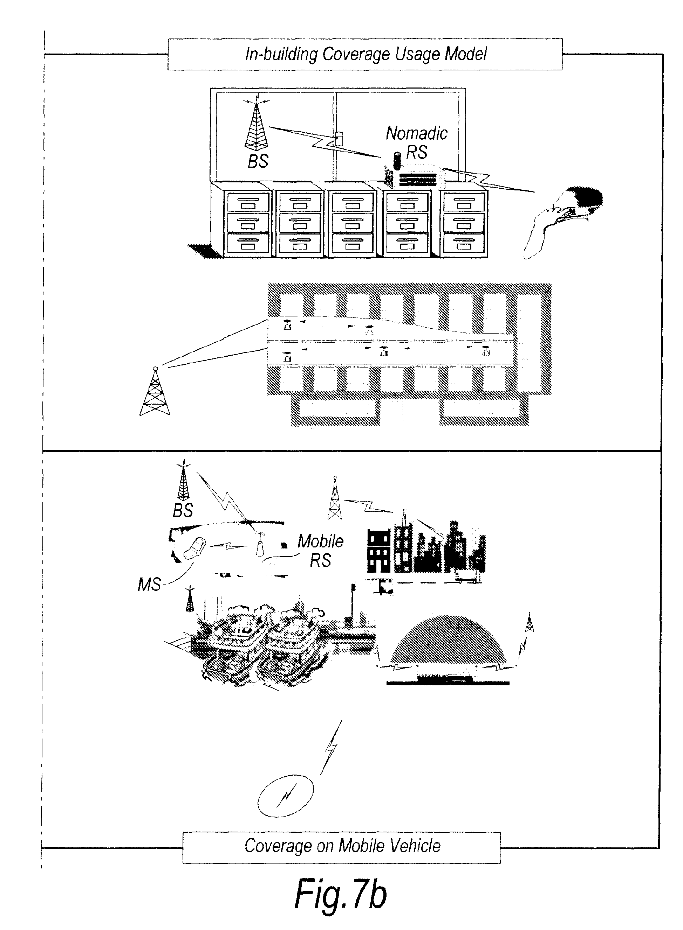

Figure 7 illustrates a number of applications for relay stations. For fixed infrastructure, the coverage provided by a relay station may be "in-fill" to allow access to the communication network for mobile stations which may otherwise be in the shadow of other objects or otherwise unable to receive a signal of sufficient strength from the base station despite being within the normal range of the base station. "Range extension" is also shown, in which a relay station allows access when a mobile station is outside the normal data transmission range of a base station. One example of in-fill shown at the top right of Figure 7 is positioning of a nomadic relay station to allow penetration of coverage within a building that could be above, at, or below ground level.

Other applications are nomadic relay stations which are brought into effect for temporary cover, providing access during events or emergencies/disasters. A final application shown in the bottom right of Figure 7 provides access to a network using a relay positioned on a vehicle.

Relays may also be used in conjunction with advanced transmission techniques to enhance gain of the communications system as explained below.

It is known that the occurrence of propagation loss, or "pathloss", due to the scattering or absorption of a radio communication as it travels through space, causes the strength of a signal to diminish. Factors which influence the pathloss between a transmitter and a receiver include: transmitter antenna height, receiver antenna height, carrier frequency, clutter type (urban, suburban, rural), details of morphology such as height, density, separation, terrain type (hilly, flat). The pathloss L (dB) between a transmitter and a receiver can be modelled by:

$$L = b + 10n \log d \qquad\qquad (A)$$

Where d (metres) is the transmitter-receiver separation, b(db) and n are the pathloss parameters and the absolute pathloss is given by $l = 10^{(L/10)}$.

The sum of the absolute path losses experienced over the indirect link SI + ID may be less than the pathloss experienced over the direct link SD. In other words it is possible for:

$$L(SI) + L(ID) < L(SD) \qquad\qquad (B)$$

Splitting a single transmission link into two shorter transmission segments therefore exploits the non-linear relationship between pathloss verses distance. From a simple theoretical analysis of the pathloss using equation (A), it can be appreciated that a reduction in the overall pathloss (and therefore an improvement, or gain, in signal strength and thus data throughput) can be achieved if a signal is sent from a source apparatus to a destination apparatus via an intermediate apparatus (e.g. relay node), rather than being sent directly from the source apparatus to the destination apparatus. If implemented appropriately, multi-hop communication systems can allow for a reduction in the transmit power of transmitters which facilitate wireless transmissions, leading to a reduction in interference levels as well as decreasing exposure to electromagnetic emissions. Alternatively, the reduction in overall pathloss can be exploited to improve the received signal quality at the receiver without an increase in the overall radiated transmission power required to convey the signal.

Multi-hop systems are suitable for use with multi-carrier transmission. In a multi-carrier transmission system, such as FDM (frequency division multiplex), OFDM (orthogonal frequency division multiplex) or DMT (discrete multi-tone), a single data stream is modulated onto N parallel sub-carriers, each sub-carrier signal having its own frequency range. This allows the total bandwidth (i.e. the amount of data to be sent in a given time interval) to be divided over a plurality of sub-carriers thereby increasing the duration of each data symbol. Since each sub-carrier has a lower information rate, multi-carrier systems benefit from enhanced immunity to channel induced distortion compared with single carrier systems. This is made possible by ensuring that the transmission rate and hence bandwidth of each subcarrier is less than the coherence bandwidth of the channel. As a result, the channel distortion experienced on a signal subcarrier is frequency independent and can hence be corrected by a simple phase and amplitude correction factor. Thus the channel distortion correction entity within a multicarrier receiver can be of significantly lower complexity of its counterpart within a single carrier receiver when the system bandwidth is in excess of the coherence bandwidth of the channel.

Orthogonal frequency division multiplexing (OFDM) is a modulation technique that is based on FDM. An OFDM system uses a plurality of sub-carrier frequencies which are orthogonal in a mathematical sense so that the sub-carriers' spectra may overlap without interference due to the fact they are mutually independent. The orthogonality of OFDM systems removes the need for guard band frequencies and thereby increases the spectral efficiency of the system. OFDM has been proposed and adopted for many wireless systems. It is currently used in Asymmetric Digital Subscriber Line (ADSL) connections, in some wireless LAN applications (such as WiFi devices based on the IEEE802.11a/g standard), and in wireless MAN applications such as WiMAX (based on the IEEE 802.16 standard). OFDM is often used in conjunction with channel coding, an error correction technique, to create coded orthogonal FDM or COFDM. COFDM is now widely used in digital telecommunications systems to improve the performance of an OFDM based system in a multipath environment where variations in the channel distortion can be seen across both subcarriers in the frequency domain and symbols in the time domain. The system has found use in video and audio broadcasting, such as DVB and DAB, as well as certain types of computer networking technology.

In an OFDM system, a block of N modulated parallel data source signals is mapped to N orthogonal parallel sub-carriers by using an Inverse Discrete or Fast Fourier Transform algorithm (IDFT/IFFT) to form a signal known as an "OFDM symbol" in the time domain at the transmitter. Thus, an "OFDM symbol" is the composite signal of all N sub-carrier signals. An OFDM symbol can be represented mathematically as:

$$x(t) = \frac{1}{\sqrt{N}} \sum_{n=0}^{N-1} c_n . e^{j2\pi n \Delta f t}, 0 \leq t \leq T_s \tag{1}$$

where $\Delta f$ is the sub-carrier separation in Hz, Ts = $1/\Delta f$ is symbol time interval in seconds, and $c_n$ are the modulated source signals. The sub-carrier vector in (1) onto which each of the source signals is modulated $c \in C_n$, $c = (c_0, c_1..c_{N-1})$ is a vector of N constellation symbols from a finite constellation. At the receiver, the received time-domain signal is transformed back to frequency domain by applying Discrete Fourier Transform (DFT) or Fast Fourier Transform (FFT) algorithm.

OFDMA (Orthogonal Frequency Division Multiple Access) is a multiple access variant of OFDM. It works by assigning a subset of sub-carriers, to an individual user. This allows simultaneous transmission from several users leading to better spectral efficiency. However, there is still the issue of allowing bi-directional communication, that is, in the uplink and download directions, without interference.

In order to enable bi-directional communication between two nodes, two well known different approaches exist for duplexing the two (forward or download and reverse or uplink) communication links to overcome the physical limitation that a device cannot simultaneously transmit and receive on the same resource medium. The first, frequency division duplexing (FDD), involves operating the two links simultaneously but on different frequency bands by subdividing the transmission medium into two distinct bands, one for forward link and the other for reverse link communications. The second, time division duplexing (TDD), involves operating the two links on the same frequency band, but subdividing the access to the medium in time so that only the forward or the reverse link will be utilizing the medium at any one point in time. Both approaches (TDD & FDD) have their relative merits and are both well used techniques for single hop wired and wireless communication systems. For example the IEEE802.16 standard incorporates both an FDD and TDD mode.

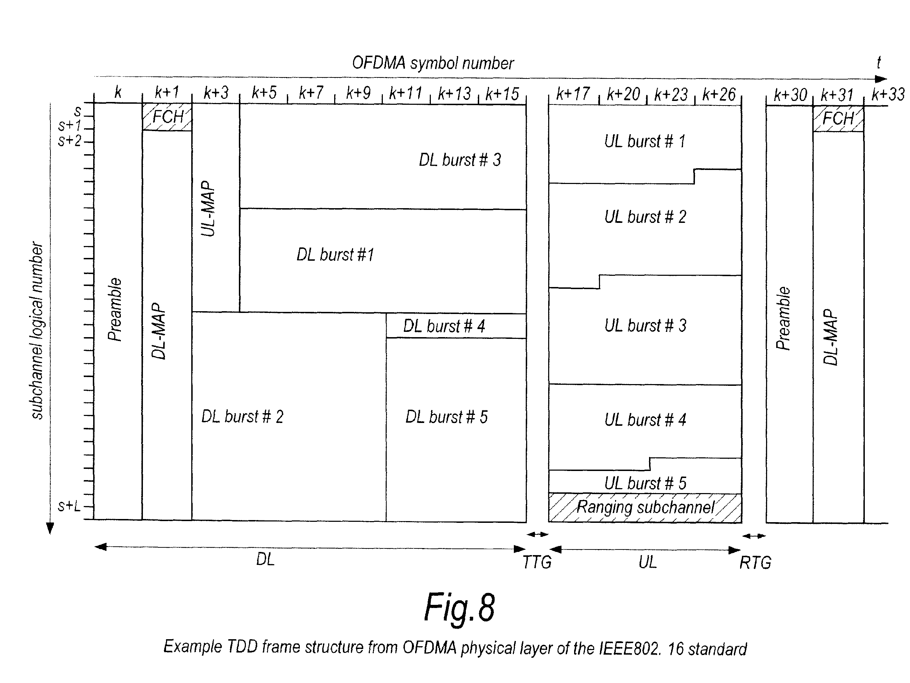

As an example, Figure 8 illustrates the single hop TDD frame structure used in the OFDMA physical layer mode of the IEEE802.16 standard (WiMAX). Each frame is divided into DL and UL subframes, each being a discrete transmission interval. They are separated by Transmit/Receive and Receive/Transmit Transition Guard interval (TTG and RTG respectively).

Each DL subframe starts with a preamble followed by the Frame Control Header (FCH), the DL-MAP, and the UL-MAP.

The FCH contains the DL Frame Prefix (DLFP) to specify the burst profile and the length of the DL-MAP. The DLFP is a data structure transmitted at the beginning of each frame and contains information regarding the current frame; it is mapped to the FCH.

Simultaneous DL allocations can be broadcast, multicast and unicast and they can also include an allocation for another BS rather than a serving BS. Simultaneous ULs can be data allocations and ranging or bandwidth requests.

Frame structures for use in multi-hop applications are disclosed in GB 0616477.6, GB 0616481.8 and GB 0616479.2 as well as agent reference P107297GB00 (filed on the same date as the present application by the same applicant). Copies of each of these applications are filed herewith and the contents thereof are incorporated by reference.

The process of modulation, transmission, reception and demodulation of an information signal, as performed in a communication system, will cause typically the original signal to experience some distortion. These distortions may include delay, frequency offset and phase rotation and can result in the reception of multiple independently distorted replicas of the original signal. In order to correct for these distortions in the receiver, it is common for a communication system to make use of special training sequences, transmitting them through the channel so that they undergo the same distortion as the information signal. As these training sequences are known in the receiver, it is possible to estimate the distortion introduced by the transmission process and then correct the received information signal so that the distortion is minimized or completely removed. Thus such a training signal can be used in both the synchronization (time & frequency) and channel estimation and equalization stages of the receiver.

It is possible to form a set of a number of known training sequences for transmission within the communication system. Each sequence in the set is distinct from all other sequences such that it is possible at the receiver to distinguish the identity of a transmitter in a communication network where multiple transmitters exist. This allows the receiver to ascertain certain properties possessed by the transmitter as well as estimate the transmitter and channel induced distortion that will be experienced on a signal that is received from that particular transmitter.

In single hop communication systems (e.g. IEEE802.16e-2005) one such transmission signal that can be used for the purposes of identification and training and synchronisation is the preamble sequence. As its name suggests, it is transmitted at the start of every frame prior to the transmission of data. A 802.16e-2005 single hop subscriber or mobile station (SS or MS) will utilize the preamble to perform a number of tasks, including transmitter identification to determine the IDCell parameter and segment number. It will also use it to synchronise (i.e. correct timing and frequency offsets) to the transmitter.

Thus to support legacy MS or SS, a relay station may be required to transmit a preamble to enable the MS or SS to identify, synchronise and communication with it. As all the preamble transmissions from all of the transmitters (BS & RS) should be time synchronized in a cellular style network, such a requirement precludes an active RS from being able to receive the preamble sequence from a BS or another RS due to the physical limitation that it cannot transmit and receive on the same transmission resource at the same time.

When operating a TDD network it is also desirable for all transmitters to be synchronised in both time and frequency. This enables a MS that is synchronised with one transmitter to be automatically synchronised with all other transmitters in the network and hence exploit this to realise fast handover between transmitters (as re-synchronisation is not required) and also perform macro-diversity like operations, such as multi-BS MBS as described in IEEE 802.16e-2005 standard and receive control and data information from two different sources.

When RS are introduced into a synchronous network it is furthermore desirable for there transmissions to be synchronised with those of the existing BS, so that the MS can continue to benefit from the associated advantages of a synchronous network. Therefore, RS must start its transmission at the same time as a BS and they must both transmit there synchronisation signal for the purposes of MS transmitter identification and synchronisation at the same time instant. This then makes it impractical for the RS, once transmitting the synchronisation signal in a single frequency TDD network to receive the BS synchronisation signal simultaneously. Hence there is no reference which the RS can use to maintain synchronisation with the BS whilst operational (i.e. transmitting its own synchronisation and identification signal).

The invention is defined in the independent claims, to which reference should now be made. Advantageous embodiments are set out in the sub claims.

The inventors have recognised this limitation in the RS, proposing embodiments which involve devising a new signal for transmission by the BS or RS which can be received by the RS to enable it to both transmit a standard preamble sequence and receive the new signal to enable it to perform transmitter identification, synchronisation and channel estimation.

The solution of invention embodiments to this problem is to transmit a special BS-RS (or RS-RS in the case of more than two-hop) synchronisation signal. The signal could also be an RS-MS signal if appropriate. However, the signal should preferably have the properties that it cannot be accidentally detected as a false frame start point by an MS who is not aware of the fact that BS or RS may transmit this "relay midamble".

Advantageous developments of this invention provide a proposed waveform type to be used for the relay midamble.

Preferred features of the present invention will now be described, purely by way of example, with reference to the accompanying drawings, in which:-

Figure 1 shows RA zone and RA region definition;

Figure 2 shows Usage of transmission resource in an RA zone;

Figure 3 shows Interaction between the transmitters and the network management entity;

Figure 4 shows Interaction between a network associating RS and the already operational network;

Figure 5 shows RA reception and processing procedure in the receiver;

Figure 6 shows a single-cell two-hop wireless communication system;

Figure 7 shows applications of relay stations; and

Figure 8 shows a single hop TDD frame structure used in the OFDMA physical layer mode of the IEEE 802.16 standard.

As an example, Figure 8 illustrates the single hop TDD frame structure used in the OFDMA physical layer mode of the IEEE802.16 standard indicating the location of the standard mandatory preamble sequence that can be used by an MS for BS identification and training of the distortion correcting elements of the receiver.

Embodiments of the invention introduce a new signal that is transmitted in another region of the DL sub-frame (other than the region where the preamble is located). This signal could be in the middle of the DL sub-frame, thus forming a mid-amble or at the end of the sub-frame, thus forming a post-amble. From here on, for the sake of generality, the new signal is referred to as the relay-amble (RA) or relay midamble (RM).

**RA signal design**

The requirements for the RA, similar to those of the preamble, are that it can be used by the receiver to identify and distinguish the transmitter from potentially a number of other transmitters in the communication network. It must also enable the receiver to estimate, or update an existing estimate, of the transmitter and channel induced distortion. It must not be accidentally identified by an MS as a normal preamble sequence, as this may confuse a legacy MS that is not aware of the existence of relay-ambles.

In order to meet these requirements, it is possible to envisage that a number of different well-known mathematical sequences could be used to generate the relay-amble or set of relay-ambles used in a communication network.

In general, the properties of the transmitted RA signal should therefore be:

    o Good auto-correlation properties: To enable the determination of time/frequency offsets induce in the transmission process;
    o Possible to form a set of unique sequences: To enable different sequences to be used to identify different transmitters (i.e. provide an identification parameter that can be further used in the receiver);
    o Good cross-correlation properties: To prevent false detection of time/frequency offsets;
    o Low peak to average power ratio (PAPR) in the time domain: Enables the use of non-linear amplifiers or transmit power boosting above the standard data transmission power due to the different in PAPR between the RA and the data signal;
    o Near-constant or constant amplitude in the frequency domain: Provides uniform sounding of the transmission channel and thus improves the accuracy that can be achieved by the channel estimator in the receiver;
    o Low correlation with all of the normal preamble sequences: Prevents false detection of the RA as a normal preamble by a legacy MS.

Based on these requirements it could be possible to use either: PN (pseudo-noise) sequences as used in the IEEE802.16 standard; Golay sequences [4] [5]; or CAZAC sequences (Constant Amplitude & Zero Auto Correlation) (see [3] for more information on use of CAZAC sequences for training) such as Chu [2] and Frank-Zadoff [1] sequences to construct the relay-amble. All of these sequences are known to exhibit some or all of the required properties and hence have been previously proposed for use in forming such training or identification sequences.

However, depending on the sequence types used for the normal preamble and the ability to provide a set of sequences with the properties listed above, it might not be possible to consider use of any of the sequence types. For example, if PN sequences are used for the normal preamble, then it could be found that it is not possible to generate a sufficient number of further PN sequences with the properties listed (for example low PAPR) for the relay-amble set. In which case, it would be more appropriate to use a set of sequences of a different type, ensuring that the selected set of relay-ambles maintain the required properties of low correlation with all the normal preamble sequences.

**Transmission process of RA at the BS or RS**

The BS or RS that is transmitting an RA will first decide on the location of the RA transmission within the downlink sub-frame. As mentioned earlier, the transmission could be located anywhere within the frame. However, it is possible to envisage that certain formal frame structures may be required to support relaying [refer to GB 0616477.6, GB 0616481.8 and GB 0616479.2] that limit the flexibility afforded to the transmitter in placement of the RA.

Once the location of the RA within the frame is determined, the transmitter then determines the amount of transmission resource that will be allocated to the RA. Various factors will have an effect on this decision including: the effective frequency reuse to be achieved at a multi-sector transmitter; the requirement to reduce interference; the amount of transmission resource that will be utilized by the BS to RS or RS to RS data transmission; the method used for separating different transmitters operating on the same frequency in a cellular network; and also the type of sequence used to form the RA.

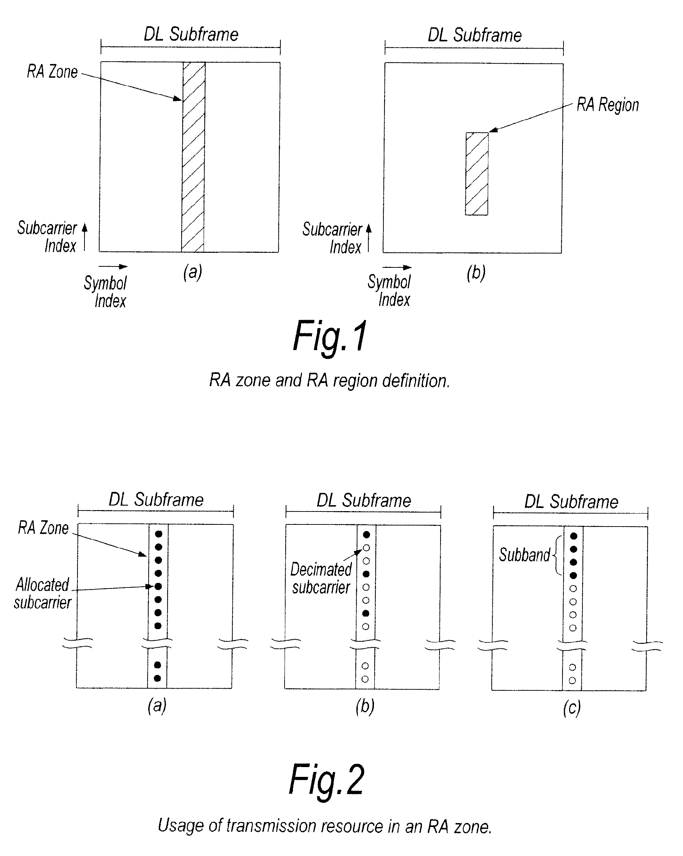

One solution is to form an RA zone in the downlink sub-frame, as shown in Figure 1(a). Here a whole OFDM symbol is reserved for RA transmission. An alternative approach is to allocate a sub-band or region of the downlink sub-frame to the RA transmission, as shown in Figure 1(b).

The former is appropriate if the whole band is available for BS to RS or RS to RS data transmission, whilst the latter could be adopted to minimize the amount of transmission resource required if a full symbol is not required as could be the case if the set of RAs is small or the BS to RS or RS to RS data transmission is only utilizing a part of the total frequency transmission resource (i.e. a sub-band).

Once a zone or region is defined within the transmitter, the transmitter then determines the usage of the transmission resource within the zone or region. Numerous usage scenarios can be envisaged, including: all tones are allocated for RA transmission; the total number of tones are decimated so that the RA is allocated to every second, third, fourth, etc, tone; a contiguous sub-band of tones is allocated. Each of these mechanisms is illustrated in Figure 2 for the case of an RA zone. It is also possible to extend the proposed methods to the case of an RA region.

The benefit of the first approach is that it enables accurate channel estimation as each tone is illuminated with a known transmission enabling distortion to be determined on each individual subcarrier. The benefit of the second approach is that in a frequency reuse 1 scenario, by decimating the tones and using different offsets of decimated sequences at different transmitters it is possible to achieve an effective frequency reuse of greater than 1. An example could be a three sector site, where a decimation factor of three is employed at each sector using an incrementing offset of the starting subcarrier number on each sector (i.e. sector 1 uses subcarriers {0, 3, 6, etc}, sector 2 uses {1, 4, 7, etc} and sector 3 uses {2, 5, 8, etc}. The benefit of the third approach is that similar to the case above, it is possible to achieve an effective frequency reuse of greater than 1 by assigning different sub-bands to different sectors.

Now that the number and location of the available tones for the transmitter is decided, the final stage is to generate the training and identification sequence to be transmitted on the identified tones. As discussed previously, it is possible to make use of a number of different well known sequences for this purpose.

It is worth noting that in a synchronous cellular network, it is likely that the zone or region allocation will be performed in some network management entity (this could be located within the core network or within one of the transmitters). Also the same situation may exist for the case of allocation of a particular sequence to a transmitter, especially if the sequence is conveying inherent identification parameters. This network management entity will then ensure that the location of the zone or region across all transmitters in the cellular network is harmonized. This then prevents interference between RA transmissions from one transmitter and data transmissions from another, which could be significant especially if the RA transmission power is boosted due to its lower PAPR properties. It will also ensure that the allocation of identification parameters ensures that from a receiver point of view, it will never experience receiving the same identification from two visible transmitters (i.e. there is sufficient spatial separation between the reuse of the same identification sequence).

Finally, the transmitter (RS/BS) may include some signalling information in the broadcast message to indicate the existence and location of the RA zone or region to the RS, alternatively it may also include signalling information in a multicast or unicast message specifically directed towards the RS to inform it of the RA existence.

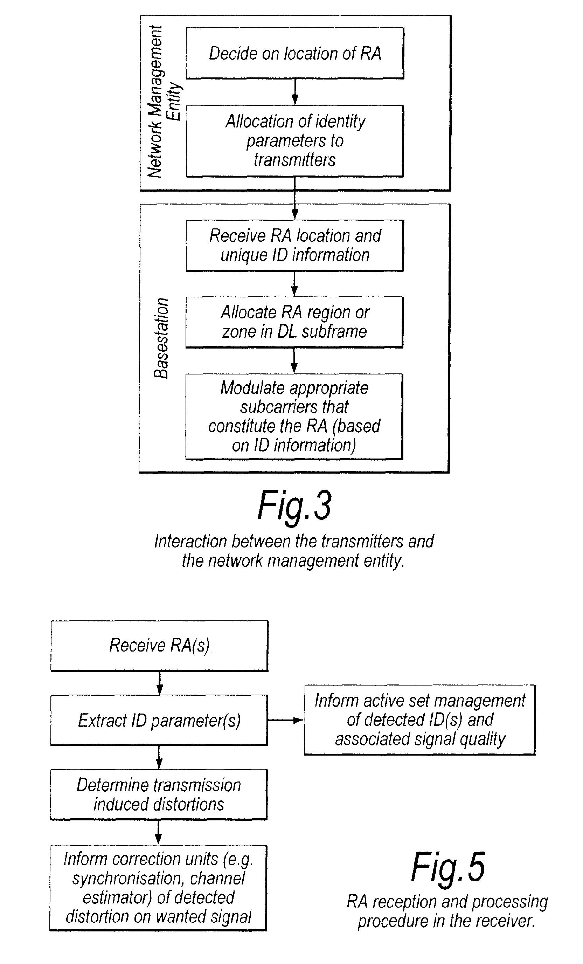

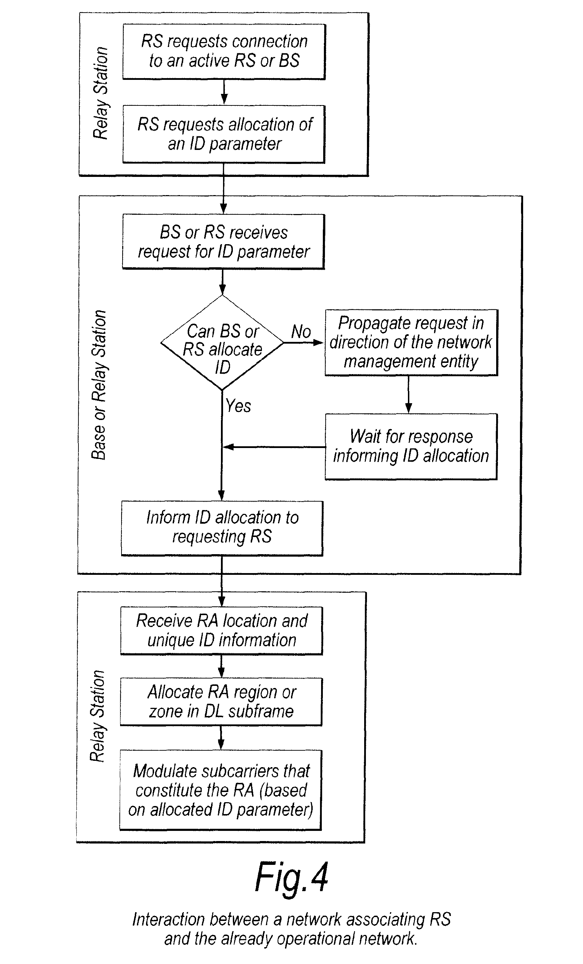

In summary, Figure 3 provides a flowchart that describes the interaction between the network management entity and the basestations which are to transmit an RA. Figure 4 provides a flowchart that describes the interaction between an RS that has entered into an already operational network and the BS or RS to which it is attempting to associate. Finally, Figure 5 outlines the RA reception and processing procedure in the receiver.

Further to the above discussion on relay midamble (RM) design an alternative embodiment is proposed where the same set of sequences used for the normal preamble are utilised. The benefit is that the optimal choice for a system can be used for both the preamble and the RM (it is not required to further extended the set of preambles and thus result in suboptimal sequences that mean a higher PAPR or worse correlation properties). The simple way to differentiate the preamble and the RM is to transmit them at different degrees of boosting over the normal data transmission (or even not to boost RM transmission).

For example in the IEEE802.16 standard the preamble power shall be boosted by 9dB over the average data power. Once such solution is to then set the RM power at 3dB below the preamble power. An MS or RS then scanning the spectrum for a preamble, may see a RM. However, the preamble will always appear with a stronger correlation peak compared to the RM, due to the fact that the preamble/RM pairs from a BS or active RS will experience the same pathloss. Therefore, when deciding on a target, the MS (or RS that is entering the network) will always lock to the preamble transmission rather than the RM transmission.

It is also possible to further increase the robustness of this technique by changing the rate of RM transmission to greater than one frame. An MS that is expecting a certain period between preambles will also correctly detect the preamble rather than the RM as the frame start point.

The RM position can be controlled dynamically through signalling messages contained in the normal (access-link) transmission period (i.e. BS or RS to MS) or in the dedicated RS (relay link) transmission period.

Note that it is not required to always transmit a RM. Two mechanisms can be defined for deciding whether to transmit an RM.

1. BS detects through the uplink transmission from an RS that it is slowly losing sync with the BS. The BS can keep correcting this through closed loop processes. However, it the amount of signalling being carried over the BS-RS (or RS-RS) link is outweighing the overhead of an RM transmission, then the BS (or RS) can decide to start transmitting the RM to assist the RS to maintain sync.

2. The RS can explicitly request transmission of the RM to assist it with synchronisation. This request could be statically provided during network entry (i.e. capability negotiation indicates it is desired/required, or through part of the registration requesting, etc). IT may also indicate at this stage the requirements on the RM, such as how often it needs to be transmitted. Alternatively it could be dynamically, as and when required, through an allocation request message. This latter method could be used by an initially stationary RS that has a high quality crystal or uses other techniques to maintain good synchronisation (such as exploiting the cyclic repetitive structure of the cyclic prefix in an OFDMA symbol) that then becomes mobile, and hence RM is required. It could also be required by an RS that wants to gather information about the signal strength from its neighbours. Again, the RS could dynamically request how often it needs the RM to be transmitted.

**Table 1. Summary of key features (Premable (P) vs RM).**

| Property | P | RM | Notes |
|---|---|---|---|
| Duration | 1 symbol | 1 symbol | No change. |
| Subcarrier Allocation | 3 Segmented FDM | 3 Segmented FDM | No change. |
| Power | +9dB | +6dB | Could be any value less than +9dB (needs to be carefully set to prevent MS from seeing it as preamble but also still provide good quality signal for sync and identification). |

(continued)

| Property | P | RM | Notes |
|---|---|---|---|
| Repetition | Every frame | TBD (currently restrictions) | Prevent 5ms periodicity and interval not noto be too long that it is not useful. Consider messaging to define RS requirements. |
| RM Request Message (from RS) | N/A | Not required | Currently no mechanism for RS to request RM. At the moment we are assuming BS can monitor any drift allocate RM if required. |
| Location | Fixed (first symbol) | Flexible | |
| Sequence | .16e Preamble | .16e Preamble | BS to allocate PN sequence for cascading RSs (i.e. beyond two hop) |
| Status | M | O | |

**Summary of benefits**

In summary the benefits of invention embodiments are:

○ Enables an RS to maintain synchronization (time & frequency) with a BS or another RS in the case that it cannot receive the identification and training information generated for use by the MS.
○ Enables an RS to use the sequence to update its estimate of the channel state information.
○ Prevents the operation of a legacy MS (that is not being designed to operate in a relay system) from being disturbed by the transmission of a further training and identification signal.
○ Enables an RS to scan and monitor the quality of the received signal from other neighbouring BSs or RSs to which it could potential associate with.

In addition, the benefits of the alternative embodiments are:

○ Enables reuse of the existing set of preamble sequences defined for MS to BS synchronisation and MS identification of BS.
○ Provides a robust and very simple mechanism to facilitate maintenance of RS synchronisation and transmitter identification.
○ Provides two mechanisms for determining whether to transmit the RM.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality of a transmitter embodying the present invention. The invention may also be embodied as one or more device or apparatus programs (e.g. computer programs and computer program products) for carrying out part or all of any of the methods described herein. Such programs embodying the present invention may be stored on computer-readable media, or could, for example, be in the form of one or more signals. Such signals may be data signals downloadable from an Internet website, or provided on a carrier signal, or in any other form.

**References**

[1] Frank RL, Zadoff SA. Phase shift codes with good periodic correlation properties. IEEE Transactions on Information Theory pp. 381-2; October 1962.
[2] Chu DC. Polyphase codes with good periodic correlation properties. IEEE Transactions on Information Theory pp. 531-2; July 1972

[3] Milewski A. Periodic sequences with optimal properties for channel estimation and fast start-up equalization. IBM Research and Development Journal pp. 426-31; Sept 1983.
[4] M.J.E. Golay, "Multislit spectroscopy," J. Opt. Soc. Amer., 39, pp. 437-444, 1949.
[5] M.J.E. Golay, "Complementary series," IRE Trans. Inform. Theory, IT-7, pp. 82-87, Apr. 1961.

**Possible application of the Relay midamble to IEEE Standard 802.16: Relay midamble contribution**

This contribution contains a technical proposal for a relay midamble that can optionally be transmitted by a MR-BS or RS in the R-DL interval. This midamble can received by an RS instead of the preamble transmitted in the access link when the RS is transmitting its own preamble.

**Introduction**

When the BS and RSs operate in a frame time synchronous manner [1], it is not practical for the RS to receive preamble transmissions in a TDD system due to the fact that they are also required to transmit preambles to support connection of SS as defined in IEEE Std. 802.16.
Consequently, the proposal is to define a new relay midamble that can be transmitted by a BS or RS during the R-Link transmission interval for reception by an RS in place of reception of the preamble in the access link interval.
The midamble is designed to have properties very similar to the normal preamble to minimize the impact on the existing standard and also enable reuse of existing technology defined for MS receiver at the RS receiver.

**Relay midamble (RM) properties**

The properties of the relay midamble are summarized in Table 1.

**Table 1. Relay midamble properties.**

| Property | Preamble | RM | Notes |
|---|---|---|---|
| Duration | 1 symbol | 1 symbol | |
| Sequence type & subcarrier allocation | As defined in 8.4.6.1.1 of IEEE Std. 802.16 | As defined in 8.4.6.1.1 of IEEE Std. 802.16 | Sequence type and subcarrier allocation technique is the same as that used for the preamble. |
| Power | +9dB | +6dB | Relative to the average data subcarrier power. |
| Repetition rate | Every frame | Flexible | |
| Location | Fixed (first symbol) | Flexible | |
| Status | M | O | |

In summary, the sequence used for the relay midamble is the same as the set of sequences used for the preamble. The two differences are that the power of each tone is boosted by +6dB over unboosted data subcarrier power and the location of the RM is flexible [1]. This prevents a simple correlation function at the SS from selecting the RM over the preamble as the candidate point for frame start and downlink channel selection during network entry.
Table 2 compares the power boosting difference between the various different data and pilot tone modulation types.
The existence of the RM is controlled by the BS. The option for the RS to request transmission of an RM is left FFS. However, two mechanisms are envisaged. The first is static request during network entry through a SBC message indicating RM is required for operation. The second is dynamic request through an unsolicited MAC management message from the RS to the BS.

**Table 2. Comparison of data and pilot tone boosting.**

| Modulation Type | I Value | Q Value | Amplitude | Boost | |
|---|---|---|---|---|---|
| | | | | Amplitude | Power (dB) |
| QPSK | 0.71 | 0.71 | 1.00 | 1.00 | 0.00 |
| Premable | 1.00 | 0.00 | 1.00 | 2.83 | 9.03 |
| Ranging | 1.00 | 0.00 | 1.00 | 1.00 | 0.00 |
| Pilot | 1.00 | 0.00 | 1.00 | 1.33 | 2.50 |
| RM | 1.00 | 0.00 | 1.00 | 2.00 | 6.02 |

**Proposed text changes**

*Insert a new subclause at the end of Section 8.4.6.1.1 as indicated:*

8.4.6.1.1.3 Relay midamble (RM)

The BS or RS may also transmit the RM in the R-DL transmission interval to facilitate RS synchronization and identification of the BS or RS by other RSs.
The subcarrier sets and the series used to modulate the RM pilots shall be the same as that defined for the preamble in 8.4.6.1.1. The modulation used for the RM pilots is boosted BPSK as defined in 8.4.9.4.3.3.

*Insert new subclause 8.4.9.4.3.3:*

8.4.9.4.3.3 Relay midamble modulation

The pilots in the RM on the R-DL shall follow the instructions in 8.4.6.1.1.3, and shall be modulated according to Equation (137a):

$$\text{Re}(RMPilotsModulated) = 4\left(\frac{1}{2} - w_k\right)$$

$$\text{Im}(RMPilotsModulated) = 0$$

*Insert a new subclause at the end of Section 8.4.10.1 as indicated:*

8.4.10.1.3 RS synchronization

For TDD and FDD realizations, it is recommended that RSs be time synchronized to a common timing signal that is also used for BS synchronization, as described in Section 8.4.10.1.1. The timing signal shall be a 1 pps timing pulse and a 10MHz frequency reference. These signals are typically provided by a GPS receiver. In the event the reference is not available from a common reference, the RS may utilize an RM transmission from a BS or other RS, as described in Section 8.4.6.1.1.3, to maintain synchronization. In the event of loss of a network timing signal that is not provided by a BS or RS, the RS shall continue to operate. The RS shall automatically resynchronize to the network timing signal when it becomes available.
For both FDD and TDD realizations, frequency references derived from the timing reference may be used to control the frequency accuracy of RSs provided that they meet the accuracy requirements of 8.4.14. This applies during normal operation and during loss of timing reference.

*Insert the following text at the end of Section 8.4.14.1:*

At the RS, both transmitter center frequency and the sampling frequency shall be derived from the same reference oscillator. The reference frequency accuracy at the RS shall be better than $\pm$2ppm and the RS uplink transmission shall be locked to the BS, so that its center frequency shall deviate no more than 2% of the subcarrier spacing compared to the BS center frequency. The RS downlink transmission shall be locked to the BS, so that its center frequency shall deviate no more than 2% of the subcarrier spacing compared to the BS center frequency.

**References**

[1] Hart, M, et al., "Frame structure for multihop relaying support", IEEE C802.16j-06/138, IEEE 802.16 meeting #46, Dallas, November 2006.

The present application is a divisional application of 07113554.5. The original claims of EP 07113554.5 are presented as statements below.

1. A transmission method for use in a multi-hop wireless communication system, the system comprising a source apparatus, a destination apparatus and one or more intermediate apparatuses, said source apparatus being operable to transmit information along a series of links forming a communication path extending from the source apparatus to the destination apparatus via the or each intermediate apparatus, and the or each intermediate apparatus being operable to receive information from a previous apparatus along the path and to transmit the received information to a subsequent apparatus along the path, the system having access to at least one predetermined transmission introduction sequence and also having access to a time-frequency format for use in assigning available transmission frequency bandwidth during a discrete transmission interval, said format defining a plurality of transmission windows within such an interval, each window occupying a different part of that interval and having a frequency bandwidth profile within said available transmission frequency bandwidth over its part of that interval, each said window being assignable for such a transmission interval to at least one of said apparatuses for use in transmission, the method comprising:

> when transmitting a message with a preamble in a particular transmission interval, transmitting the preamble in a first transmission window of that transmission interval; and
> transmitting the or one of the transmission introduction sequences in a second transmission window of that transmission interval other than the first transmission window as control information, preferably for use by at least one said intermediate apparatus or the destination apparatus.

2. A transmission method according to statement 1, wherein the second transmission window is assigned to the source apparatus for transmission to at least one said intermediate apparatus.

3. A transmission method according to statement 1 or 2, wherein the second transmission window is assigned to at least one said intermediate apparatus for transmission to at least one other said intermediate apparatus and/or the destination apparatus.

4. A transmission method according to any of the preceding statements, wherein the transmission introduction sequence transmitted is a preamble-type sequence identifying its transmitting apparatus and providing training information.

5. A transmission method according to any of the preceding statements, wherein the system has access to a set of sequences for use as the preamble and the transmission introduction sequence transmitted is from that set of sequences.

6. A transmission method according to any of the preceding statements, wherein the preamble transmission is boosted to provide a good quality signal.

7. A transmission method according to statement 6, wherein the transmission introduction sequence transmitted is also boosted to provide a good quality signal.

8. A transmission method according to statement 7, wherein the transmission introduction sequence transmitted is boosted less than the preamble, so that it can be distinguished from the preamble.

9. A transmission method according to statement 8, wherein the difference in boost is of the order of ≤9 dB and is preferably approximately 1 - 8 dB or more preferably 2 - 4 dB.

10. A transmission method according to any of statements 1 to 4 or 6 to 8, wherein the transmission introduction sequence is a sequence that is easily distinguished from the preamble, to avoid false detection of the transmission introduction as the preamble.

11. A transmission method according to any of the preceding statements, the method further comprising:

after the particular transmission interval, one of said apparatuses requesting repositioning of the introduction sequence transmission within the format; and then
when transmitting a message with a preamble in a transmission interval subsequent to the particular transmission interval, transmitting the preamble in a first transmission window of the subsequent transmission interval corresponding in its part of the subsequent transmission interval to the interval part occupied by the first transmission window of the particular transmission interval; and
transmitting the or one of the transmission introduction sequences in a third transmission window of the subsequent transmission interval which does not correspond in its part of the subsequent transmission interval to the interval parts occupied by the first and second transmission windows of the particular transmission interval.

12. A transmission method according to any of the preceding statements, the method further comprising:

when transmitting a message with a preamble in a transmission interval subsequent to the particular transmission interval, transmitting the preamble in a first transmission window of the subsequent transmission interval corresponding in its part of the subsequent transmission interval to the interval part occupied by the first transmission window of the particular transmission interval; and
not transmitting any transmission introduction sequence.

13. A transmission method according to any of the preceding statements, the method further comprising:

when transmitting a message with a preamble in a transmission interval subsequent to the particular transmission interval, transmitting the preamble in a first transmission window of the subsequent transmission interval corresponding in its part of the subsequent transmission interval to the interval part occupied by the first transmission window of the particular transmission interval; and
transmitting the or one of the transmission introduction sequences in a second transmission window of the subsequent transmission interval corresponding in its part of the subsequent transmission interval to the interval part occupied by the second transmission window of the particular transmission interval.

14. A transmission method according to statement 11, 12 or 13, wherein the subsequent transmission interval is separated from the particular transmission interval by one or more further transmission intervals.

15. A transmission method according to any of the preceding statements, comprising, prior to transmission in the particular transmission interval, one of said apparatuses requesting transmission of the or one of the transmission introduction sequences.

16. A transmission method according to statement 15, wherein the source apparatus or the or one of the intermediate apparatuses requests transmission of the or one of the transmission introduction sequences if it detects that such transmission would be advantageous.

17. A transmission method according to statement 15 or 16, wherein transmission of the or one of the transmission introduction sequences is requested if another method of synchronization is failing or involves more transmission overhead than such transmission.

18. A transmission method according to statement 15 or 16, wherein the or one of the intermediate apparatuses requests transmission of the or one of the transmission introduction sequences during network entry.

19. A transmission method according to statement 15, 16 or 17, wherein the or one of the intermediate apparatuses requests transmission of the or one of the transmission introduction sequences dynamically.

20. A transmission method according to any of the preceding statements, wherein the second transmission window has a fixed transmission frequency bandwidth which occupies the entire said available transmission bandwidth over its entire part of the transmission interval.

21. A transmission method according to any of statements 1 to 19, wherein the second transmission window has a fixed transmission frequency bandwidth which occupies a fraction of said available transmission bandwidth over its part of the transmission interval.

22. A transmission method according to any of the preceding statements, wherein a single said transmission introduction sequence is transmitted in said second transmission window.

23. A transmission method according to statement 22, wherein said single transmission sequence is transmitted by said source apparatus and at least one said intermediate apparatus and said transmission introduction sequence comprises a spreading code allowing separate identification of said source apparatus and said at least one intermediate apparatus.

24. A transmission method according to any of statements 1 to 21, wherein more than one said transmission introduction sequence is transmitted in said second transmission window.

25. A transmission method according to statement 24, wherein said source apparatus and at least one said intermediate apparatus each transmit an individual transmission introduction sequence using an individual allocation of the transmission frequency bandwidth to that apparatus.

26. A transmission method according to statement 25, using a multi-carrier transmission technique, wherein the individual bandwidth allocations are assigned using decimation.

27. A transmission method according to statement 25, using a multi-carrier transmission technique, wherein the individual bandwidth allocations are assigned using sub-banding.

28. A transmission method according to any of the preceding statements, including transmitting signalling information indicating the existence of the second window.

29. A transmission method according to any preceding statement, wherein the time-frequency format is a format for a downlink or uplink sub-frame in a time-division-duplex communication system.

30. A transmission method according to any preceding statement, wherein said system is an OFDM or OFDMA system, and wherein the time-frequency format is a format for an OFDM or OFDMA downlink or uplink sub-frame of an OFDM or OFDMA time-division-duplex frame.

31. A transmission method according to any preceding statement, wherein each said discrete transmission interval is a sub-frame period.

32. A transmission method according to any preceding statement, wherein each said transmission window comprises a region in an OFDM or OFDMA frame structure.

33. A transmission method according to any preceding statement, wherein each said transmission window comprises a zone in an OFDM or OFDMA frame structure.

34. A multi-hop wireless communication system, the system comprising:

a source apparatus, a destination apparatus and one or more intermediate apparatuses, said source apparatus being operable to transmit information along a series of links forming a communication path extending from the source apparatus to the destination apparatus via the or each intermediate apparatus, and the or each intermediate apparatus being operable to receive information from a previous apparatus along the path and to transmit the received information to a subsequent apparatus along the path;

access means operable to access at least one predetermined transmission introduction sequence and to access a time-frequency format for use in assigning available transmission frequency bandwidth during a discrete transmission interval, said format defining a plurality of transmission windows within such an interval, each window occupying a different part of that interval and having a frequency bandwidth profile within said available transmission frequency bandwidth over its part of that interval, each said window being assignable for such a transmission interval to one of said apparatuses for use in transmission; and

transmission means for, when transmitting a message with a preamble in a particular transmission interval, transmitting the preamble in a first transmission window of that transmission interval, and for transmitting the or one of the transmission introduction sequences in a second transmission window of that transmission interval other than the first transmission window as control information, preferably for use by at least one said intermediate apparatus or the destination apparatus.

35. A network management entity operable to manage a multi-hop wireless communication system, the system comprising a source apparatus, a destination apparatus and one or more intermediate apparatuses, said source apparatus being operable to transmit information along a series of links forming a communication path extending from the source apparatus to the destination apparatus via the or each intermediate apparatus, and the or each intermediate apparatus being operable to receive information from a previous apparatus along the path and to transmit the received information to a subsequent apparatus along the path, the network management entity comprising:

access provision means operable to provide the communication system with access to a time-frequency format for use in assigning available transmission frequency bandwidth during a discrete transmission interval, said format defining a plurality of transmission windows within such an interval, including a first window for preamble transmission and a second window other than said first window for transmitting at least one predetermined transmission introduction sequence, each window occupying a different part of that interval and having a frequency bandwidth profile within said available transmission frequency bandwidth over its part of that interval, each said window being assignable for such a transmission interval to at least one of said apparatuses for use in transmission; and

transmission introduction sequence allocation means operable to provide at least one said transmission introduction sequence for transmission in said second transmission window of such a transmission interval and preferably for use by at least one said intermediate apparatus or the destination apparatus.

36. A source apparatus in a multi-hop wireless communication system, the system comprising the source apparatus, a destination apparatus and one or more intermediate apparatuses, said source apparatus being operable to transmit information along a series of links forming a communication path extending from the source apparatus to the destination apparatus via the or each intermediate apparatus, and the or each intermediate apparatus being operable to receive information from a previous apparatus along the path and to transmit the received information to a subsequent apparatus along the path, the source apparatus comprising:

transmission introduction sequence means operable to access or produce at least one predetermined transmission introduction sequence;

format access means to access a time-frequency format for use in assigning available transmission frequency bandwidth during a discrete transmission interval, said format defining a plurality of transmission windows within such an interval, each window occupying a different part of that interval and having a frequency bandwidth profile within said available transmission frequency bandwidth over its part of that interval, each said window being assignable for such a transmission interval to one of said apparatuses for use in transmission; and

transmission means operable, when transmitting a message with a preamble in a particular transmission interval, to transmit the preamble in a first transmission window of that transmission interval, and to transmit the or one of the transmission introduction sequences in a second transmission window of that transmission interval other than the first transmission window as control information, preferably for use by at least one said intermediate apparatus or the destination apparatus.

37. A particular intermediate apparatus in a multi-hop wireless communication system, the system comprising a source apparatus, a destination apparatus and one or more intermediate apparatuses, said source apparatus being operable to transmit information along a series of links forming a communication path extending from the source apparatus to the destination apparatus via the or each intermediate apparatus, and the or each intermediate apparatus being operable to receive information from a previous apparatus along the path and to transmit the received information to a subsequent apparatus along the path, the particular intermediate apparatus comprising:

transmission introduction sequence means operable to access or produce at least one predetermined transmission introduction sequence;

format access means operable to access a time-frequency format for use in assigning available transmission frequency bandwidth during a discrete transmission interval, said format defining a plurality of transmission windows within such an interval, each window occupying a different part of that interval and having a frequency bandwidth profile within said available transmission frequency bandwidth over its part of that interval, each said window being assignable for such a transmission interval to one of said apparatuses for use in transmission; and transmission means operable, when transmitting a message with a preamble in a particular transmission interval, to transmit the preamble in a first transmission window of that transmission interval, and to transmit the or one of the transmission introduction sequences in a second transmission window of that transmission interval other than the first transmission window as control information, preferably for use by at least one said intermediate apparatus or the destination apparatus.

38. A computer program which, when executed on a computing device of a multi-hop wireless communication system causes the system to carry out a transmission method, the system comprising a source apparatus, a destination apparatus and one or more intermediate apparatuses, said source apparatus being operable to transmit information along a series of links forming a communication path extending from the source apparatus to the destination apparatus via the or each intermediate apparatus, and the or each intermediate apparatus being operable to receive information from a previous apparatus along the path and to transmit the received information to a subsequent apparatus along the path, the system having access to at least one predetermined transmission introduction sequence and also having access to a time-frequency format for use in assigning available transmission frequency bandwidth during a discrete transmission interval, said format defining a plurality of transmission windows within such an interval, each window occupying a different part of that interval and having a frequency bandwidth profile within said available transmission frequency bandwidth over its part of that interval, each said window being assignable for such a transmission interval to at least one of said apparatuses for use in transmission, the method comprising:

when transmitting a message with a preamble in a particular transmission interval, transmitting the preamble in a first transmission window of that transmission interval; and
transmitting the or one of the transmission introduction sequences in a second transmission window of that transmission interval other than the first transmission window as control information, preferably for use by at least one said intermediate apparatus or the destination apparatus.

**Claims**

1. A multi-hop wireless communication system comprising:

a source apparatus including a transmitting unit configured to transmit a preamble and data;
an intermediate apparatus configured to relay said data; and
a destination apparatus configured to receive said data via said intermediate apparatus,

wherein said source apparatus or said intermediate apparatus is configured to transmit a sequence that is received by a subordinate apparatus corresponding to said intermediate apparatus or another intermediate apparatus and said subordinate apparatus is configured to receive said sequence for synchronization or monitoring.

2. The multi-hop wireless communication system according to claim 1, wherein said preamble and said sequence are transmitted at different timings.

3. The multi-hop wireless communication system according to claim 1 or 2, wherein said sequence is transmitted at the end part of a downlink frame that starts from said preamble.

4. The multi-hop wireless communication system according to any of the preceding claims, wherein said sequence is different from preambles transmitted from source apparatuses including said source apparatus.

5. The multi-hop wireless communication system according to any of the preceding claims, wherein said source apparatus allocates a frequency and a timing for transmission of said sequence when said sequence is transmitted from said source apparatus.

6. The multi-hop wireless communication system according to any of the preceding claims, wherein said source apparatus or said intermediate apparatus which transmits said sequence informs of transmission of said sequence, or a frequency and a timing used for transmission of said sequence.

7. The multi-hop wireless communication system according to any of the preceding claims, wherein transmission power of said preamble and transmission power of said sequence are set different from each other.

8. The multi-hop wireless communication system according to any of the preceding claims, wherein a transmission timing or a transmission frequency of said sequence is changed by signaling.

9. The multi-hop wireless communication system according to any of the preceding claims, wherein transmission of said sequence is started in response to a request from an intermediate apparatus.

10. A method used for multi-hop wireless communication system, said method comprising:

   transmitting a preamble and data from a source apparatus;
   relaying said data by an intermediate apparatus;
   receiving said data by a destination apparatus via said intermediate apparatus,
   transmitting, from said source apparatus or said intermediate apparatus, a sequence that is received by a subordinate apparatus corresponding to said intermediate apparatus or another intermediate apparatus; and
   receiving, by said subordinate apparatus, said sequence for synchronizing or monitoring.

11. A source apparatus in a multi-hop wireless communication system including said source apparatus, an intermediate apparatus and a destination apparatus, said source apparatus comprising:

   a transmitting unit configured to transmit a preamble, a sequence and data, said data being relayed to said destination apparatus by said intermediate apparatus, said sequence being received by said intermediate apparatus for synchronization with said source apparatus or monitoring of a radio communication path between said source apparatus and said intermediate apparatus.

12. An intermediate apparatus in a multi-hop wireless communication system including a source apparatus, said intermediate apparatus and a destination apparatus, said intermediate apparatus comprising:

   a receiving unit configured to receive, from a superordinate apparatus corresponding to said source apparatus or another intermediate apparatus, a sequence that is transmitted at a timing which is different from a transmission timing of a preamble that is transmitted from said source apparatus and to synchronize with said superordinate apparatus or to monitor a radio communication path between said superordinate and said intermediate apparatus.

## Fig.1

RA zone and RA region definition.

## Fig.2

Usage of transmission resource in an RA zone.

Network Management Entity

Decide on location of RA

↓

Allocation of identity parameters to transmitters

Basestation

Receive RA location and unique ID information

↓

Allocate RA region or zone in DL subframe

↓

Modulate appropriate subcarriers that constitute the RA (based on ID information)

# Fig.3

Interaction between the transmitters and the network management entity.

Receive RA(s)

↓

Extract ID parameter(s) → Inform active set management of detected ID(s) and associated signal quality

↓

Determine transmission induced distortions

↓

Inform correction units (e.g. synchronisation, channel estimator) of detected distortion on wanted signal

# Fig.5

RA reception and processing procedure in the receiver.

**Relay Station**

RS requests connection to an active RS or BS

RS requests allocation of an ID parameter

**Base or Relay Station**

BS or RS receives request for ID parameter

Can BS or RS allocate ID — No → Propagate request in direction of the network management entity

Yes

Wait for response informing ID allocation

Inform ID allocation to requesting RS

**Relay Station**

Receive RA location and unique ID information

Allocate RA region or zone in DL subframe

Modulate subcarriers that constitute the RA (based on allocated ID parameter)

# Fig.4

Interaction between a network associating RS and the already operational network.

EP 2 136 587 A2

$P_{tx,NB}$

$L_{NB-RN}$

$L_{NB-UE}$

$P_{rx,NB-UE}$

$P_{rx,NB-RN}$

$P_{tx,RN}$

$L_{RN-UE}$

$P_{rx,RN-UE}$

Basestation
$(f_c = f_{NB})$

Relay Node
$(f_c = f_{RN})$

UE

*Fig.6*

Fig.7a

Fig.7b

t

| k | k+1 | k+3 | k+5 | k+7 | k+9 | k+11 | k+13 | k+15 | | k+17 | k+20 | k+23 | k+26 | | k+30 | k+31 | k+33 |

s
s+1
s+2

FCH

subchannel logical number

Preamble

DL-MAP

UL-MAP

DL burst # 3

DL burst #1

DL burst # 4

DL burst # 2

DL burst # 5

UL burst # 1

UL burst # 2

UL burst # 3

UL burst # 4

UL burst # 5

Ranging subchannel

Preamble

DL-MAP

FCH

s+L

DL

TTG

UL

RTG

## Fig.8

Example TDD frame structure from OFDMA physical layer of the IEEE802. 16 standard

EP 2 136 587 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0616477 A
- GB 0616481 A
- GB 0616479 A
- EP 07113554 A

**Non-patent literature cited in the description**

- **Frank RL ; Zadoff SA.** Phase shift codes with good periodic correlation properties. *IEEE Transactions on Information Theory,* October 1962, 381-2
- **Chu DC.** Polyphase codes with good periodic correlation properties. *IEEE Transactions on Information Theory,* July 1972, 531-2
- **Milewski A.** Periodic sequences with optimal properties for channel estimation and fast start-up equalization. *IBM Research and Development Journal,* September 1983, 426-31
- **M.J.E. Golay.** Multislit spectroscopy. *J. Opt. Soc. Amer.,* 1949, vol. 39, 437-444
- **M.J.E. Golay.** Complementary series. *IRE Trans. Inform. Theory,* April 1961, vol. IT-7, 82-87
- **Hart, M et al.** Frame structure for multihop relaying support. *IEEE C802.16j-06/138, IEEE 802.16 meeting #46,* November 2006